# EUROPÄISCHE PATENTSCHRIFT

(11) **EP 1 724 175 B1**
(45) Veröffentlichungstag und Bekanntmachung des Hinweises auf die Patenterteilung: **02.09.2009**
(21) Anmeldenummer: 06113058.9
(22) Anmeldetag: 25.04.2006
(51) Int. Cl.: B60W 50/08

(54) **Verfahren und Vorrichtung zur Fahrerunterstützung**
Method and device for driver assistance
Procédé et dispositif d'assistance au conducteur

(30) Priorität: 17.05.2005 DE 102005022663
(43) Veröffentlichungstag der Anmeldung: 22.11.2006
(73) Patentinhaber: ROBERT BOSCH GMBH, 70442 Stuttgart (DE)
(72) Erfinder: Maass, Alexander, 71229 Leonberg (DE); Leicht, Holger, 71296 Heimsheim (DE)

(56) Entgegenhaltungen:
- EP-A- 0 846 933
- EP-A- 1 457 947
- DE-A1- 10 114 187
- JP-A- 11 083 521
- JP-A- 2000 018 956
- US-A1- 2003 025 597
- US-A1- 2003 033 080

## Beschreibung

### Stand der Technik

Die Erfindung betrifft ein Verfahren und einer Vorrichtung zur Fahrerunterstützung.

Situationen, in denen der Fahrzeugführer Aspekte der Längs- sowie Querführung in geeigneter Weise aufeinander abstimmen und koordinieren muss, stellen besondere Anforderungen und weisen ein hohes Gefahrenpotential auf. Dies gilt insbesondere für Situationen, in denen ein Spurwechsel mit einer gleichzeitigen angepassten Geschwindigkeitsveränderung einhergeht. Die klassischen Beispiele hierfür sind Einfädelsituationen, insbesondere dann, wenn die gerade befahrene Fahrspur endet.

Die vorliegende Erfindung betrifft ein Verfahren und einer Vorrichtung zur Fahrerunterstützung mit einer Umfeldsensorik zur Erfassung des Verkehrsumfelds, insbesondere des vor dem Fahrzeug liegenden Bereichs. Mit Hilfe einer solchen Umfeldsensorik, insbesondere mit wenigstens einer die Szene vor dem Fahrzeug aufnehmenden Kamera, werden Fahrspuren z.B. anhand von Fahrspurrandmarkierungen und/oder Verkehrszeichen, die auf der Fahrspur angebracht sind und ein Ende einer Fahrspur anzeigen, erkannt. Ausgehend von dieser Information wird ein Informationssignal für den Fahrer erzeugt, welches den Fahrer über das Ende der Fahrspur, über eine möglichen Spurwechsel, etc. informiert. Fahrzeugeingriffe, v.a. in Motor und/oder Bremse sind ebenfalls denkbar. Darüber hinaus kann die Umfeldsensorik auch den Verkehr auf einer Nachbarspur erfassen.

In der DE 10053315 A1 ist eine Vorgehensweise zur Erfassung von Verkehrszeichen mittels einer im Fahrzeug angebrachten Kamera beschrieben. Aus den von der Kamera aufgenommen Bildern werden die Verkehrszeichen extrahiert und mit gespeicherten Muster verglichen. Wird ein Verkehrszeichen aufgefunden, wird ggf. eine dem Verkehrszeichen entsprechende Maßnahme eingeleitet, z.B. ein Warnsignal erzeugt. Dabei werden auch Verkehrszeichen, die auf der Fahrspur angebracht sind, wie ein Zebrastreifen und dergleichen, erkannt. Die oben dargestellte Verkehrssituation wird nicht gezeigt.

In der DE 19627 938 A1 ist ein Beispiel für die Erkennung und Modellierung von Fahrspurrandmarkierungen aus Videobildern beschrieben, wobei als Parameter unter anderem Fahrspurbreite, Fahrspurkrümmung, Krümmungsänderung und seitlicher Versatz des Fahrzeugs ermittelt werden.

Ein Spurwechselassistent ist z. B. aus DE 101 14 187 A1 bekannt. Dieser wird in Verbindung mit einem Geschwindigkeitsregelsystem, beispielsweise einem so genannten ACC-System (Adaptive Cruise Control) eingesetzt, das nicht nur in der Lage ist, die Geschwindigkeit des Fahrzeugs auf eine vom Fahrer gewählte Wunschgeschwindigkeit zu regeln, sondern auch in der Lage ist, die Geschwindigkeit des eigenen Fahrzeugs erforderlichenfalls an die Geschwindigkeit des vorausfahrenden Fahrzeugs anzupassen, so dass dieses in einem geeigneten Sicherheitsabstand verfolgt wird. Zu diesem Zweck ist eine Umfeldsensorik, mit der die Abstände und ggf. auch die Relativgeschwindigkeiten vorausfahrender Fahrzeuge gemessen werden können. Der Spurwechselassistent dient dazu, dem Fahrer den Wechsel auf eine Nebenspur zu erleichtern, beispielsweise, wenn er einen Überholvorgang einleiten will und ist so ausgebildet, dass er, wenn ein Spurwechselwunsch des Fahrers erkannt ist, automatisch einen Beschleunigungsvorgang einleitet, so dass das Einfädeln in den fließenden Verkehr auf der Nebenspur erleichtert wird. Die bei diesem Beschleunigungsvorgang zu erreichende Zielgeschwindigkeit oder Überholgeschwindigkeit ist dabei nicht nur von der Geschwindigkeit des auf der eigenen Spur vorausfahrenden, zu überholenden Fahrzeugs abhängig, sondern auch von der Geschwindigkeit eines oder mehrerer weiterer Fahrzeuge, die sich vor dem eigenen Fahrzeug auf der Nebenspur befmden. Auf diese Weise wird ein zu dichtes Auffahren auf das Fahrzeug auf der Nebenspur vermieden. Ein Überhol- bzw. Spurwechselwunsch des Fahrers wird bei dem bekannten System beispielsweise daran erkannt, dass der Fahrer den entsprechenden Fahrtrichtungsanzeiger (Blinker) betätigt.

US 2003/033080 A1 zeigt, dass ein Fahrer vor einer Verkehrsituation informiert bzw. gewarnt wird, bei welcher im Rahmen der Routenführung eines Navigationssystems eine Überquerung benachbarter Fahrbahnen in relativ kurzer Distanz notwendig ist. Enthält die beabsichtigte Route derartige Verkehrssituationen, wird der Fahrer darüber informiert, gewarnt oder ihm eine Alternativeroute angeboten, so dass eine Verbesserung der Fahrsicherheit eintreten soll.

Der nächstliegende Stand der Technik (US 2003/025597 A1) zeigt ein Verfahren und eine entsprechende Vorrichtung zur Fahrerunterstützung bei Kraftfahrzeugen, wobei eine Einfädelsituation erkannt wird, bei der der Fahrer des Kraftfahrzeugs in den Verkehr auf einer anderen Fahrspur einfädeln muss, wobei bei erkannter Einfädelsituation, wenn die Fahrspur auf der das Kraftfahrzeug fährt, endet, ein Informationssignal für den Fahrer ermittelt wird, welches den Fahrer auf die bevorstehende Einfädelsituation hinweist.

### Vorteile der Erfindung

Der Fahrer eines Fahrzeug wird in einer besonders kritischen und schwierig zu beherrschenden Fahrsituation, wenn die eigene Fahrspur endet und der Fahrer somit gezwungen ist, die Spur zu wechseln, wirksam durch eine Information hinsichtlich des Fahrspurendes und/oder hinsichtlich seiner Möglichkeiten zum Fahrspurwechsel unterstützt und entlastet.

Besondere Vorteile ergeben sich aus einer Anzeige, die dem Fahrer signalisiert, dass die Fahrspur demnächst endet, insbesondere dass ihm die noch verbleibende Entfernung bis zum Ende der Fahrspur dargestellt wird. Damit wird der Fahrer bei Richtigkeit der Einschätzung der Verkehrssituation unterstützt.

Von besonderem Vorteil ist eine Anzeige für den Fahrer, dass ein Wechsel auf die Nachbarfahrspur nicht mehr möglich ist. Diese Information wird aus den Sensorsignalen der Umfeldsensorik abgeleitet, mit deren Hilfe ermittelt werden kann, ob bei momentaner Geschwindigkeit des Fahrzeugs und seinem Beschleunigungsvermögen ein Einfädeln in den Verkehr der Nachbarspur noch möglich ist oder nicht. Damit wird der Fahrer bei der Beherrschung der Verkehrssituation wirksam unterstützt.

Eine weitere Verbesserung ergibt sich, wenn ein Eingriff in den Motor bzw. die Bremse erfolgt, um das Einfädeln auf die Nachbarspur zu unterstützen bzw. zu verhindern.

Weitere Vorteile ergeben sich aus der nachfolgenden Beschreibung von Ausführungsbeispielen bzw. aus den abhängigen Ansprüchen.

### Zeichnung

Die Erfindung wird im Folgenden anhand von nachstehend beschriebenen Ausführungsbeispielen in den Zeichnungen dargestellt und näher erläutert.

Es zeigen:
- Figur 1: ein Blockdiagramm eines Fahrerassistenzsystems;
- Figuren 2 bis 4: Skizzen von Verkehrssituationen zur Erläuterung der Funktionsweise des Fahrerassistenzsystems;

### Beschreibung des Ausführungsbeispiels

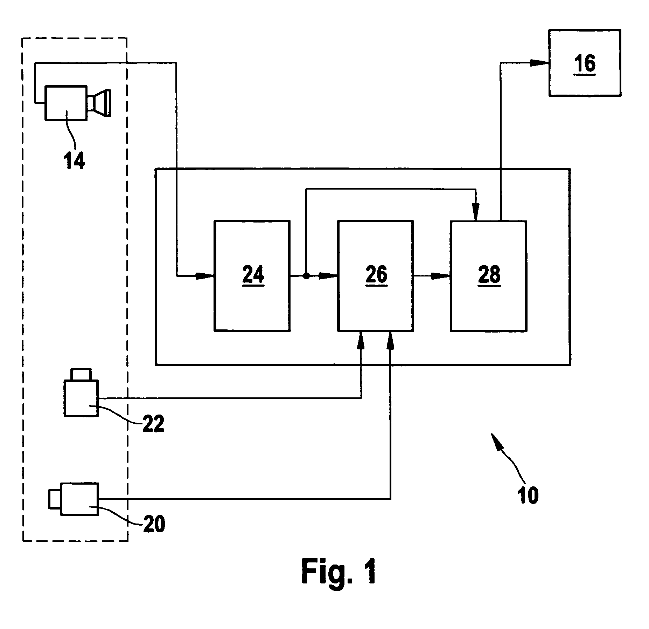

Figur 1 zeigt ein vereinfachtes Blockdiagramm eines Fahrerassistenzsystems 10 für ein Kraftfahrzeug. Das Fahrerassistenzsystem 10 erhält Signale von wenigstens einer Videokamera 14, die Bildsequenzen der Szene vor dem Fahrzeug aufnimmt. Es wertet die Bilder in bekannter Weise zur Ermittlung des Verlaufs der Fahrspur, auf der sich das Fahrzeug bewegt, aus, insbesondere anhand des Verlaufs der Fahrspurrandmarkierungen. Ferner sind noch Umfeldsensoren 20 und 22 vorgesehen, die Information des Rückraum des Fahrzeug und bezüglich der Nachbarspur ermitteln. Diese Sensoren können Radarsensoren, Videosensoren, Lasersensoren oder Ultraschallsensoren sein und erfassen auch den Abstand zu Objekten auf Nachbarspuren.

Im Zusammenhang mit der nachfolgend beschriebenen Vorgehensweise sind Funktionsblöcke 24, 26 und 28 des Fahrerassistenzsystems vorgesehen. Die Funktionsblöcke entsprechen dabei in einer bevorzugten Realisierungsform Programmmodulen.

Funktionsblock 24 stellt eine Entscheidungseinrichtung dar zur Entscheidung, ob die eigene Fahrspur endet und somit eine Einfädelsituation vorliegt. In dieser Entscheidungseinrichtung werden die von der Kamera 14 aufgenommen Bilder ausgewertet. Anhand der Fahrspurmarkierungen wird der Verlauf der vor dem Fahrzeug liegenden und vom Fahrzeug befahrenen Fahrspur ermittelt. Ferner werden ggf. auf dem Boden befmdliche Verkehrszeichen, wie Pfeile, schraffierte Sperrflächen, etc. auf der oder in Verlängerung zu der vom Fahrzeug befahrenen Fahrspur ermittelt. Ein Ende der Fahrspur wird z.B. dann erkannt, wenn die beiden berechneten Verläufe der beiden Randmarkierungen, welche als Gleichungen dargestellt werden, in einem vorgegebenen Entfernungsbereich Schnittpunkte aufweisen. Verkehrzeichen auf dem Boden werden z.B. durch Vergleich der im Bild erkannten Objekten mit vorgegebenen Mustern ermittelt, wenn die Objekte auf der aufgrund von Fahrzeuggrößen wie Lenkwinkel errechneten Fahrzeugtrajektorie liegen. In diesen Fällen werden Einfädelsituationen vermutet.

In einer anderen Ausführung wird eine Einfädelsituation nur dann erkannt, wenn die oben genannten Verkehrszeichen auf der Fahrspur erkannt wurden und gleichzeitig eine endende Fahrspur ermittelt wurde. Dies kann eine Kombination aus eine schraffierten Sperrfläche mit einer endenden Fahrspur sein, oder ein Pfeil mit einer endenden Strichlung einer Fahrspurrandmarkierung oder andere Kombinationen dieser Erkennungsmöglichkeiten.

Eine weitere Möglichkeit, bei welcher auf eine Videokamera verzichtet werden kann oder bei der die Bilder der Videokamera zur Plausibilisierung verwendet werden, ist, dass das Ende eine Fahrspur aus den Kartendaten z.B. eine Navigationssystems abgeleitet wird. Dabei wird anhand der Kartendaten und der Ortungsdaten des Fahrzeugs festgestellt, dass sich das Fahrzeug auf einer Fahrspur befindet, die in einem bestimmten Entfernungsbereich endet.

Aus den Bilddaten, insbesondere aus den Gleichungen, die den Verlauf der Randmarkierungen beschreiben, lässt sich auch die Entfernung abschätzen, in der die Fahrspur endet. Entsprechendes ergibt sich auch den Karten- und Ortungsdaten. In einer bevorzugten Ausführung liefert die Spurerkennung auch eine Information bezüglich des Abstandes zum Fahrspurende. Dabei wird eine einseitige Krümmungsänderung der Fahrspurrandmarkierung und ggf. zusätzlich eine endende Linie auf der anderen Seite erkannt. Eine Abschätzung der Entfernung zwischen der Krümmungsänderung und der aktuellen Position des Fahrzeugs erfolgt dann mittels eines Modells, z.B. eines Lochkameramodells, welches die Weltkoordination in Kamerakoordination transformiert und umgekehrt. Unter der Annahme, dass die erkannten Fahrspurmarkierungen in einer Ebene liegen, lässt sich as der Rücktransformation der Kamerakoordinaten in Weltkoordinaten die Entfernung abschätzen.

Die Einscheidungseinrichtung 24 gibt die Information aus, dass eine Einfädelsituation vorliegt, somit in absehbarer Zeit ein Spurwechsel notwendig ist. Ferner kann eine Information ausgegeben werden, in welcher Entfernung die von Fahrzeug befahrene Fahrspur endet.

Je nach Ausführungsbeispiel wird diese Information einer Ausgabeeinrichtung 28 zur Ausgabe einer entsprechenden Fahrerinformation oder einem Berechnungseinrichtung 26 zur Ermittlung von Fahrerhinweise bezüglich des Spurwechsels (Wechselempfehlung, Beschleunigungsempfehlung, Bremsempfehlung, etc.), dessen Ausgangssignale dann an der Ausgabeeinrichtung 28 zur Fahrerinformation ausgegeben werden.

Im erstgenannten Fall werden je nach Ausführung verschiedene Warnungen generiert. Als zweckmäßig haben sich folgende Warnsignale einzeln oder in beliebiger Kombination erwiesen: Eine optische Anzeige, dass die eigene Fahrspur endet; Eine Sprachausgabe, dass die Fahrspur endet; Eine akustische Anzeige (Warnton), dass die Fahrspur endet; Eine optische Anzeige, in welcher Entfernung die Fahrspur endet, z.B. mittels eines Balkendiagramms; Eine akustische oder sprachliche Ausgabe, z.B. in Form eines Countdown über die Entfernung bis zum Ende der Fahrspur oder in Form von Warntönen, die mit näher kommenden Fahrspurende häufiger erzeugt werden. Die Ausgabeeinrichtung setzt die empfangene Signale in Signale zur Ansteuerung einer Informationseinrichtung 16 um.

Im zweit genannten Fall, bei welchem in der Berechnungseinrichtung 26 auf der Basis der Signale der weiteren Sensoren die Verkehrssituation auf der Spur berücksichtigt wird, in die eingefädelt werden muss, werden Fahrerhinweise ermittelt, die dem Fahrer konkrete Empfehlungen zu seinem Verhalten in der Einfädelsituation geben, z.B. eine Empfehlung zum Spurwechsel, wenn ein geeigneter Zeitpunkt vorliegt, eine Empfehlung zum Beschleunigen oder Verzögern des Fahrzeugs, etc. Alternativ oder neben der reinen Fahrerinformation ist einem Ausführungsbeispiel vorgesehen, entsprechend der Empfehlung in die Fahrzeuglängsregelung oder auch die Fahrzeugquerregelung einzugreifen und durch entsprechende Motor- und/oder Bremseneingriff das Fahrzeug zu beschleunigen oder zu verzögern.

Die von der Berechnungseinrichtung 26 ermittelten Informationen werden dann zur Ausgabe an die Ausgabeeinrichtung 28 gegeben, der die Information optisch, akustisch, haptisch, als Sprache, etc. dem Fahrer zur Kenntnis gibt.

In der Praxis werden die genannten Funktionsblöcke durch Programm-Module gebildet, die auf einem Mikrorechner oder einem Netzwerk von Mikrorechnern laufen.

Wenn die Entscheidungseinrichtung 24 entscheidet, dass eine Einfädelsituation durch ein Ende der Fahrspur bevorsteht und ein Einfädeln notwendig ist, überwacht die Berechnungseinrichtung 26 mit Hilfe des Rückraumsensors 20 und des Nahbereichssensors 22 den Verkehr auf der Nebenspur hinter und neben dem eigenen Fahrzeug und sucht nach geeigneten Einscherlücken. Wenn eine Einscherlücke gefunden ist, werden die Abstands- und Geschwindigkeitsdaten des Eigenfahrzeugs und des oder der Fahrzeuge auf der Nachbarspur ausgewertet und ein geeigneter Spurwechselzeitpunkt und /oder die gegebenenfalls notwendige Beschleunigung bzw. die zu erreichende Geschwindigkeit für das Einfädeln in den fließenden Verkehr auf der Nachbarspur errechnet. Entsprechende Information werden dann dem Fahrer wie oben beschrieben dargestellt.

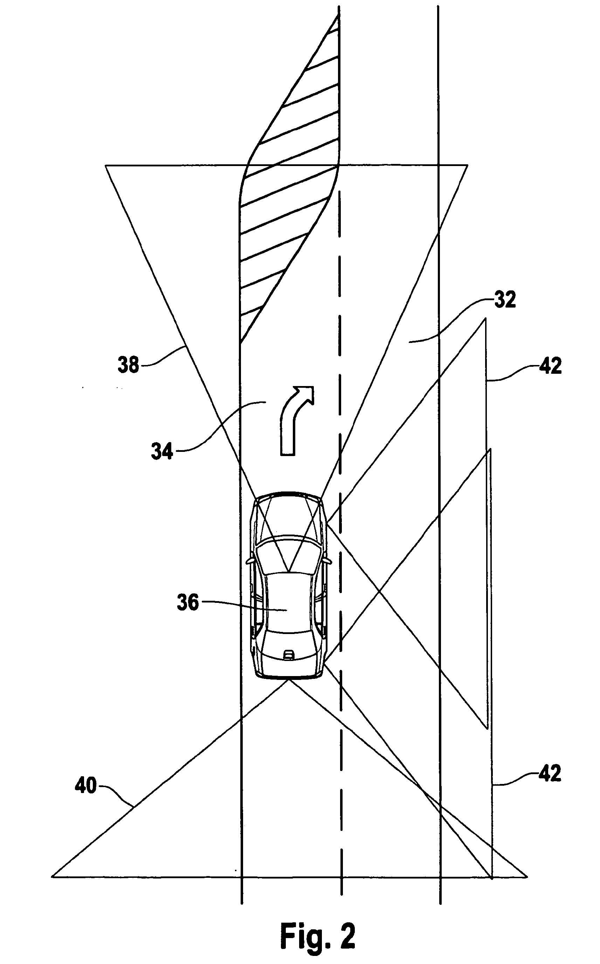

In Figur 2 ist in der Draufsicht eine zweispurige Fahrbahn mit einer rechten Spur 32 und einer linken Spur 34 dargestellt. Die Fahrzeuge bewegen sich dabei auf der Zeichnungsebene von unten nach oben. Auf der linken Spur 34 fährt ein Fahrzeug 36, das mit dem System nach Figur 1 ausgerüstet ist. Als Flächen sind der Ortungsbereich 38 der Videokamera 14, und, sofern vorhanden, der Ortungsbereich 40 des Rücksensors 20 und die Ortungsbereiche 42 von zwei Nahbereichsensoren 22 dargestellt. Die Videokamera ermittelt die Szene vor dem Fahrzeug, 36, während der Rückraumsensor den Verkehr auf der Spur 32 hinter dem Fahrzeug 36 überwacht. Der Ortungsbereich 42 des Nahbereichssensors überwacht den Verkehr auf der Spur 32 neben dem Fahrzeug 36.

In einer ersten Verkehrssituation, die in Figur 2 dargestellt ist, ist die Spur 32 frei. Das Fahrzeug 36 fährt mit der vom Fahrer gewählten Wunschgeschwindigkeit. Wird anhand der Fahrspurrandmarkierungen und/oder der Verkehrszeichen auf den Boden eine Einfädelsituation aufgrund eines Fahrspurendes erkannt, wird nach einem Einscherfenster auf der Spur 32 gesucht. Da diese Spur frei ist, ist das Einscherfenster unendlich ausgedehnt. Für die Durchführung des Spurwechsels hat der Fahrer des Fahrzeugs 36 daher einen sehr großen zeitlichen Spielraum. Den Fahrer wird daher eine Information über das Ende seiner Fahrspur in einer oben gezeigten Arten übermittelt und/oder er erhält eine Spurwechselempfehlung.

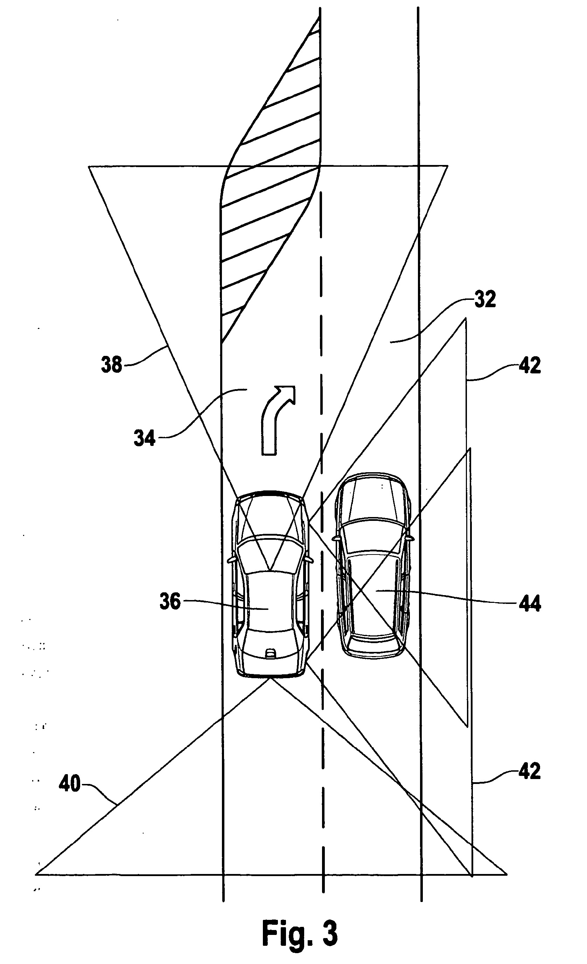

In einer anderen Verkehrssituation, die in Figur 3 dargestellt wird, wird zunächst vom Rückraumsensor und dann vom Nahbereichssensor 22 ein Fahrzeug 44 auf der Nachbarspur geortet. Daher wird erkennt, dass die Nachbarspur nicht frei ist. In diesem Fall wird dem Fahrer eine Information über das Ende seiner Fahrspur in einer oben gezeigten Arten übermittelt und/oder er erhält eine Empfehlung, sein Fahrzeug zu verzögern, da ein Einfädeln nicht möglich ist. Wird der Abstand des Fahrzeugs auf der Nachbarspur zum Eigenfahrzeug größer als der Mindestabstand (nachdem das Fahrzug 44 auf der Nachbarspur überholt hat), kann das Eigenfahrzeug 36 auf die Nachbarspur wechseln, ohne dass der Mindestabstand zum Fahrzeug dort unterschritten wird. Der Fahrer erhält dann eine Spurwechselempfehlungsinformation. Ferner wird in einer Ausführung eine geeignete zu erreichende Geschwindigkeit bzw. Beschleunigung zur Erreichung dieser Geschwindigkeit errechnet (z.B. die Geschwindigkeit des Fahrzeugs auch der Nachbarspur) und dem Fahrer angezeigt. Mindestabstand bedeutet in diesem Zusammenhang ein minimaler Sicherheitsabstand zu einem vorausfahrenden Fahrzeug.

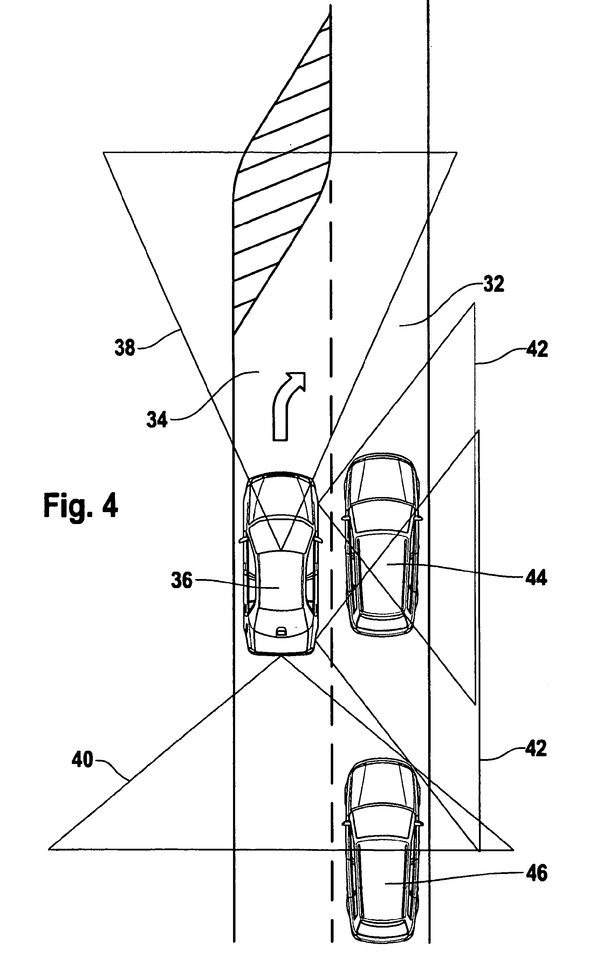

In einer weiteren Verkehrssituation, die Figur 4 zeigt, befindet sich auf der Nachbarspur hinter dem oben erwähnten Fahrzeug 44 noch ein weiteres Fahrzeug 46, das vom Rückraumsensor 20 geortet wird. Die Fahrzeuge auf der Nachbarspur fahren mit gleicher Geschwindigkeit, und ihr gegenseitiger Abstand ist kleiner als die Summe der Mindestabstände zu dem Eigenfahrzeug. Die Erkennungseinrichtung 26 stellt somit fest, dass zwischen den Fahrzeugen auf der Nachbarspur kein Fenster für einen sicheren Spurwechsel offen ist. Dementsprechend unterbleibt eine Einfädelempfehlung. In einer Ausführung wird dem Fahrer eine Empfehlung zur Verzögerung des Fahrzeugs angezeigt oder aktiv das Fahrzeug verzögert bzw. gebremst. Frühestens nach Abschluss des Überholvorgangs des letzten Fahrzeugs auf der Nachbarspur könnte eine Einfädelempfehlung ausgegeben werden, falls nicht noch ein weiteres Fahrzeug folgt.

Wenn das letzte Fahrzeug auf der Nachbarspur den Ortungsbereich des Rückraumsensors verlässt, tritt es in den Ortungsbereich des Nahbereichssensors ein, und auch in diesem Fall erkennt die Erkennungseinrichtung 26, dass das Spurwechselfenster weiterhin geschlossen ist.

Geht man davon aus, dass bei einer Situation wie oben geschildert der Abstand zwischen den beiden Fahrzeugen auf der Nachbarspur größer als die Summe der Mindestabstände ist, kann sich ein Fenster für ein gefahrloses Einfädeln auftun. Dementsprechend wird eine Spurwechselempfehlung ausgegeben, wenn die Mindestabstände zu den beiden Fahrzeugen auf der Nebenspur eingehalten werden können. Ferner wird die Zielgeschwindigkeit, auf die das Eigenfahrzeug beschleunigen muss, ermittelt. Die muss mindestens gleich der Geschwindigkeit der beiden Fahrzeuge auf der Nachbarspur sein. Daraus wird ferner die Größe der notwendigen Beschleunigung berechnet und zwar so, dass der Abstand zwischen dem Eigenfahrzeug und dem hinteren Fahrzeug auf der Nachbarspur zu keinem Zeitpunkt kleiner wird als der Mindestabstand. So ist sichergestellt, dass ein ausreichender Mindestabstand zu den Fahrzeugen auf der Nachbarspur eingehalten wird, ohne dass das hintere Fahrzeug seine Geschwindigkeit verringern muss, unabhängig davon, zu welchem Zeitpunkt innerhalb des Fensters der Fahrer den Spurwechsel vornimmt. Die Zielgeschwindigkeit bzw. die errechnete Beschleunigung werden dem Fahrer nach Beginn des Spurwechsels angezeigt, z.B. in der Tachometeranzeige als feste oder entsprechend der notwendigen Geschwindigkeitsänderung variable Markierung.

Die Beschleunigungsempfehlung kann dabei taktil über die Pedalerie erfolgen oder akustisch. Auch eine optische Anzeige wäre denkbar. Der optimale Zeitpunkt für den Spurwechsel kann ebenso über ein akustisches oder ein taktiles Signal (z.B. Lenkrad) dem Fahrer signalisiert werden. Eine visuelle Anzeige ist auch hier möglich. Ferner kann in einer Ausführung eine Sprachausgabe vorgesehen sein, welche Anweisungen an den Fahrer in Sprache ausgibt, z.B. "bitte für Spurwechel beschleunigen auf 80 kmh" oder "Spurwechsel vornehmen", etc.

## Patentansprüche

1. Verfahren zur Fahrerunterstützung bei Kraftfahrzeugen, wobei eine Einfädelsituation erkannt wird, bei der der Fahrer des Kraftfahrzeugs in den Verkehr auf einer anderen Fahrspur einfädeln muss, wobei bei erkannter Einfädelsituation, wenn die Fahrspur auf der das Kraftfahrzeug fährt, endet, ein Informationssignal für den Fahrer ermittelt wird, welches den Fahrer auf die bevorstehende Einfädelsituation hinweist, **dadurch gekennzeichnet, dass** ein Ende der Fahrspur dann erkannt wird, wenn die beiden berechneten Verläufe der beiden Randmarkierungen, in einem vorgegebenen Entfernungsbereich Schnittpunkte aufweisen.

2. Verfahren nach Anspruch 1, **dadurch gekennzeichnet, dass** eine Einfädelsituation nur dann erkannt wird, wenn Verkehrszeichen auf der Fahrspur erkannt wurden und gleichzeitig eine endende Fahrspur ermittelt wurde.

3. Verfahren nach einem der vorhergehenden Ansprüche, **dadurch gekennzeichnet, dass** das Informationssignal eine akustische und/oder eine optische Anzeige steuert.

4. Verfahren nach einem der vorhergehenden Ansprüche, **dadurch gekennzeichnet, dass** das Informationssignal eine Sprachausgabe steuert.

5. Verfahren nach einem der vorhergehenden Ansprüche, **dadurch gekennzeichnet, dass** die Einfädelsituation auf der Basis der Daten einer digitalen Karte und/oder auf der Basis der Signale eines die Szene vor dem Fahrzeug beobachtenden Videosensors erkannt wird.

6. Verfahren nach einem der vorhergehenden Ansprüche, **dadurch gekennzeichnet, dass** das Informationssignal dem Fahrer auch Hinweise auf einen geeigneten Einfädelzeitpunkt gibt und/oder Hinweise zur Beschleunigung und/oder Verzögerung des Fahrzeugs gibt.

7. Verfahren nach einem der vorhergehenden Ansprüche, **dadurch gekennzeichnet, dass** aus dem Informationssignal Eingriffsignale gebildet werden, die das Fahrzeug beschleunigen und/oder verzögern.

8. Verfahren nach einem der vorhergehenden Ansprüche, **dadurch gekennzeichnet, dass** die Entfernung, in der die Fahrspur endet, aus den Gleichungen, die den Verlauf der Randmarkierung beschreiben, ermittelt wird und/oder eine einseitige Krilmmungsändenrng der Fahrspurrandmarkierung und ggf. zusätzlich endende Linie auf der anderen Seite erkannt wird.

9. Verfahren nach einem der vorhergehenden Ansprüche, **dadurch gekennzeichnet, dass** das Informationssignal dem Fahrer Hinweise gibt, in welcher Entfernung die eigene Fahrspur endet.

10. Vorrichtung zur Fahrerunterstützung bei Kraftfahrzeugen, mit einer Erkennungseinrichtung (24), die eine Einfädelsituation erkennt, bei der der Fahrer des Kraftfahrzeugs in den Verkehr auf einer anderen Fahrspur einfädeln muss, wobei die Vorrichtung derart konfiguriert ist, dass bei erkannter Einfädelsituation ein Informationssignal für den Fahrer ermittelt wird, welches den Fahrer auf die bevorstehende Einfädelsituation hinweist, **dadurch gekennzeichnet, dass** ein Ende der Fahrspur dann erkannt wird, wenn die beiden berechneten Verläufe der beiden Randmarkierungen, in einem vorgegebenen Entfernungsbereich Schnittpunkte aufweisen.

## Claims

1. Method for providing driver assistance in motor vehicles, wherein a cutting-in situation is detected in which the driver of the motor vehicle has to cut into the traffic on another lane, wherein, when a cutting-in situation is detected when the lane on which the motor vehicle is travelling ends, an information signal for the driver which alerts the driver to the imminent cutting-in situation is determined, **characterized in that** an end of the lane is detected if the two calculated profiles of the two edge markings have intersection points in a predefined distance range.

2. Method according to Claim 1, **characterized in that** a cutting-in situation is detected only if road signs have been detected on the lane and at the same time a lane which is ending has been determined.

3. Method according to one of the preceding claims, **characterized in that** the information signal controls an acoustic and/or visual display.

4. Method according to one of the preceding claims, **characterized in that** the information signal controls a voice output.

5. Method according to one of the preceding claims, **characterized in that** the cutting-in situation is detected on the basis of the data of a digital map and/or on the basis of the signals of a video sensor which observes the scene in front of the vehicle.

6. Method according to one of the preceding claims, **characterized in that** the information signal also provides the driver with information relating to a suitable cutting-in time and/or information relating to the acceleration and/or deceleration of the vehicle.

7. Method according to one of the preceding claims, **characterized in that** intervention signals, which accelerate and/or decelerate the vehicle, are formed from the information signal.

8. Method according to one of the preceding claims, **characterized in that** the distance at which the lane ends is determined from the equations which describe the profile of the edge marking, and/or a one-sided change in curvature of the lane edge marking and, if appropriate, an additionally ending line on the other side are/is detected.

9. Method according to one of the preceding claims, **characterized in that** the information signal provides the driver with information about the distance at which said driver's own lane ends.

10. Device for providing driver assistance in motor vehicles, having a detection device (24) which detects a cutting-in situation in which the driver of the motor vehicle has to cut into the traffic on another lane, wherein the device is configured in such a way that, when a cutting-in situation is detected, an information signal for the driver is determined, which signal alerts the driver to the imminent cutting-in situation, **characterized in that** an end of the lane is detected if the two calculated profiles of the two edge markings have intersection points in a predefined distance range.

## Revendications

1. Procédé d'assistance au conducteur d'un véhicule automobile, qui détecte une situation d'engagement dans une autre bande de circulation, dans laquelle le conducteur du véhicule doit s'engager dans le trafic d'une autre bande de circulation, et lorsqu'une situation d'engagement dans une autre bande de circulation est détectée, c'est-à-dire lorsque la bande de circulation sur laquelle le véhicule se déplace se termine, un signal informant le conducteur est déterminé et indique au conducteur la situation prévisible d'engagement dans une autre bande de circulation,
**caractérisé en ce que**
la fin d'une bande de circulation est détectée lorsque les deux déroulements calculés des deux marquages de bordures présentent un point de concours situé dans une plage de distance prédéterminée.

2. Procédé selon la revendication 1, **caractérisé en ce qu'**une situation d'engagement dans une autre bande de circulation n'est détectée que si des signaux de signalisation ont été détectés sur la bande de circulation et qu'en même temps il est déterminé que la bande de circulation se termine.

3. Procédé selon l'une des revendications précédentes, **caractérisé en ce que** le signal d'information commande un affichage acoustique et/ou optique.

4. Procédé selon l'une des revendications précédentes, **caractérisé en ce que** le signal d'information commande une émission vocale.

5. Procédé selon l'une des revendications précédentes, **caractérisé en ce que** la situation d'engagement dans une autre bande de circulation est détectée sur base des données d'une carte numérique et/ou sur base des signaux d'un détecteur vidéo qui observe la scène qui se déroule devant le véhicule.

6. Procédé selon l'une des revendications précédentes, **caractérisé en ce que** le signal informant le conducteur donne également des indications sur l'instant approprié d'engagement dans une autre bande de circulation et/ou des indications d'accélération et/ou de ralentissement du véhicule.

7. Procédé selon l'une des revendications précédentes, **caractérisé en ce que** les signaux d'intervention qui accélèrent et/ou ralentissent le véhicule sont formés à partir du signal d'information.

8. Procédé selon l'une des revendications précédentes, **caractérisé en ce que** la distance à laquelle la bande de circulation se termine est déterminée à partir des équations qui décrivent l'évolution du marquage des bordures et/ou d'une modification unilatérale de la courbure du marquage d'une bordure de la bande de circulation et éventuellement d'une ligne qui se termine sur l'autre côté.

9. Procédé selon l'une des revendications précédentes, **caractérisé en ce que** le signal d'information donne au conducteur des indications sur la distance à laquelle sa propre bande de circulation se termine.

10. Dispositif d'assistance au conducteur d'un véhicule automobile, présentant un dispositif de détection (24) qui détecte une situation d'engagement dans une autre bande de circulation dans laquelle le conducteur du véhicule doit s'introduire dans le trafic d'une autre bande de circulation, le dispositif étant configuré de telle sorte que lorsqu'une situation d'engagement dans une autre bande de circulation est détectée, un signal informant le conducteur est déterminé et indique au conducteur la situation prévisible d'engagement dans une autre bande de circulation,
**caractérisé en ce que**
l'extrémité de la bande de circulation est détectée si les deux évolutions calculées des deux marquages de bordure présentent un point de concours situé à une plage de distance prédéterminée.
